# EUROPEAN PATENT SPECIFICATION

(11) **EP 2 184 187 B1**
(45) Date of publication and mention of the grant of the patent: **18.04.2012**
(21) Application number: 08828695.0
(22) Date of filing: 26.08.2008
(51) Int. Cl.: B60C 9/18, B60C 9/06, B60C 9/08, B60C 9/22

(54) **PNEUMATIC TIRE FOR TWO-WHEELED VEHICLE**
LUFTREIFEN FÜR EIN ZWEIRÄDRIGES FAHRZEUG
PNEUMATIQUE POUR VÉHICULE À DEUX ROUES

(30) Priority: 27.08.2007 JP 2007220128
(43) Date of publication of application: 12.05.2010
(73) Proprietor: Bridgestone Corporation, Tokyo 104-8340 (JP)
(72) Inventor: ISHIYAMA, Makoto, Kodaira-shi Tokyo 187-8531 (JP)
(74) Representative: Whalley, Kevin
(86) International application number: PCT/JP2008/065203
(87) International publication number: WO 2009/028504

(56) References cited:
- EP-A1- 1 541 378
- WO-A1-2004/018237
- WO-A1-2008/075737
- JP-A- 06 024 207
- JP-A- 2000 177 313
- JP-A- 2005 535 504
- JP-A- 2005 535 505
- JP-A- 2007 283 802

## Description

### TECHNICAL FIELD

The present invention relates to a pneumatic tire for a motorcycle improving driving stability at a high speed, particularly to a pneumatic tire suitable for a motorcycle improving traction performance when a vehicle body is largely inclined in cornering.

### RELATED ART

In a high-performance pneumatic tire for a motorcycle, since a centrifugal force has a major impact due to a high rotational speed of the tire, a tread portion of the tire expands in the radially outer direction of the tire, which sometimes causes deterioration of driving stability. In order to prevent this, such a tire structure is developed that a reinforcing member (a spiral member) made of organic fiber or steel is wound in a tread portion of a tire in parallel to a tire equatorial plane (a tire center). Aliphatic polyamide fiber, aromatic polyamide fiber, steel and the like are used as a reinforcing member spirally wound along the tire equatorial plane. Above all, aromatic polyamide and steel, which can restrain expansion of a tread portion without being extended at a high temperature are attracting attention.

A lot of examples of disposing spiral cords in a crown portion of a tire are proposed (for example, see patent documents 1-5) since a so-called "hoop" effect (effect of high driving stability and durability by suppressing the crown portion of the tire like a hoop of a bathtub from expanding due to a centrifugal force even when the tire is rotated at a high speed) can be enhanced in case that these members are wound around the crown portion of the tire.

It is known that driving stability at a high speed is excellent and traction performance is very high in a pneumatic tire for a motorcycle provided with these spiral members wound.

However, driving stability (particularly turning performance) when a vehicle (for example, a motorcycle) equipped with a pneumatic tire for a motorcycle is largely inclined is not drastically improved because a reinforcing member (a spiral member) is wound. Some riders request the improvement of grip performance when a motorcycle is largely inclined.

[Patent document 1] JP2004-067059A
[Patent document 2] JP2004-067058A
[Patent document 3] JP2003-011614A
[Patent document 4] JP2002-316512A
[Patent document 5] JP9-226319A
WO 2004/018 237 describes a known type for two-wheeled vehicles.

### DISCLOSURE OF THE INVENTION

### PROBLEMS TO BE SOLVED BY THE INVENTION

The present invention aims to provide a pneumatic tire for a motorcycle further improving driving stability especially in turning in view of the above-mentioned facts.

### MEANS FOR SOLVING THE PROBLEM

The inventor has made a study as follows to accomplish the present invention. Since a pneumatic tire for a motorcycle turns with its vehicle body being inclined, a tread portion contacts the ground in different portions between straight running and turning. In other words, a central portion of the tread portion is used in straight running and an end portion of the tread portion is used in turning. Therefore, a tire for a motorcycle has a very round shape in comparison with a tire for a passenger car. The following unique characteristics can be seen especially in turning due to this round crown shape (the shape of the tread portion of the tire).

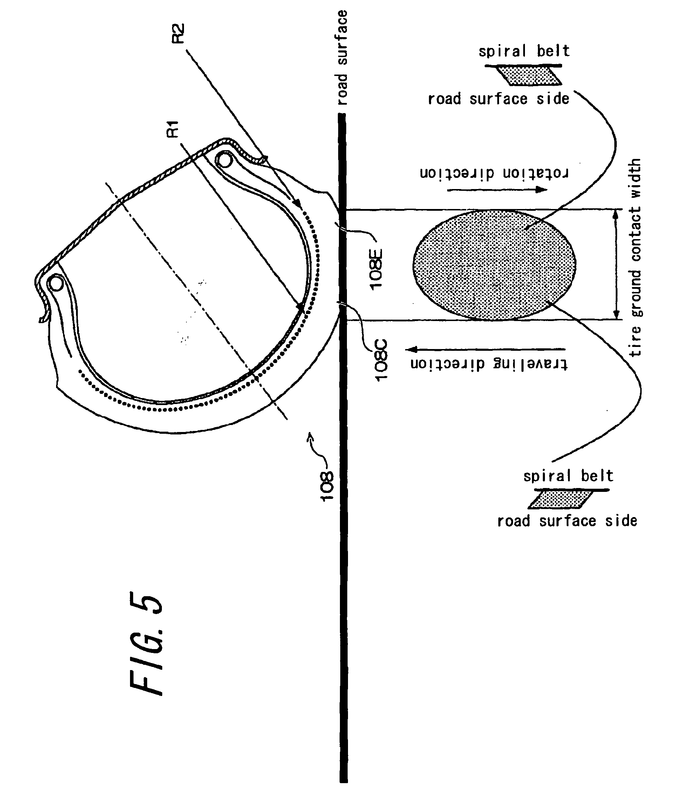

As for turning performance in a pneumatic tire for a motorcycle, especially when a vehicle body is largely inclined, an end of one side of the tread of the tire contacts the ground to generate a grip force. When a vehicle body is largely inclined, the ground state is shown in Fig. 5. In considering the ground shape at that time, as shown in Fig. 5, deformation states of the tread portion are different between a region near the center of the ground shape and a region near the tread end of the ground shape. When deformation of the tread portion 108 in the rotation direction of the tire (referred to as a tire circumferential direction or tire back and forth directions) is observed, a tread portion 108C near the center is in a driving state while a tread portion 108E near the tread edge is in a braking state.

Driving means that deformation of the tread portion generated just when the tire is applied with a driving force in such a manner that, as viewed in a cross section of the tire cut along the equator direction, a lower surface of the tread (a surface contacting frame members inside of the tire) receives a shear force in the opposite direction of the tire travelling direction while the tread surface contacting a road surface is deformed in the tire travelling direction. On the other hand, braking is opposite to driving, the tread in braking is deformed in such a manner that the tire inner side (the belt side) receives a forward shear force while the tread surface contacting a road surface is backward deformed, which is a behavior of a tire in braking. As shown in Fig. 5, when a tire turns with its vehicle body being largely inclined at a large camber angle such as 45 degrees, the ground contact region near the tread center is in a driving state while the region near the tread edge is in a braking state even if the tire receives no driving and braking forces. This is caused by a difference in radius (a diameter difference) of a belt portion of a tire. In a pneumatic tire for a motorcycle, a crown portion of the tire is so rounded that a distance from a rotation axis to a belt in the tread center is largely different from that in the tread edge. In case of Fig. 5, radius R1 at a position near the center of the ground contact portion is apparently larger than radius R2 at a position near the tread edge of the ground contact portion. Since angular speed at which a tire rotates is constant, if a portion of the belt has the larger radius R1, the speed of the belt portion (the speed of the tire in the circumferential direction along a road surface when the tire contacts the road surface, which is obtained by multiplying the tire angular speed by a belt radius) is the faster. Although the tread surface of the tire does not receive a shear force in the back and forth directions at the moment when it contacts a road surface, it moves while contacting the road surface as the tire rotates and receives a shear force in the back and forth directions when it leaves the road surface. At that time, shear deformation of a driving state occurs in the tread portion 108C near the tire center where the speed of the belt is fast while braking deformation occurs in the tread end portion (the tread portion 108E near the tread edge ) where the speed of the belt is slow. This is deformation of the tread portion 108 in the back and forth directions.

Uneven wear is easy to be generated in a tire shoulder portion due to such unnecessary deformation in turning. In addition, shear deformation in the opposite directions such as in the back and forth directions occurs in the tread so that unnecessary behavior makes waste of a tire grip force in turning. Ideally, if all of the tread portion contacting the ground is deformed in the same behavior, a grip force becomes the maximum. However, a grip force is sometimes not generated in a position contacting the ground with the above-mentioned unnecessary deformation. For example, when a tire whose vehicle body is inclined receives a driving force to be accelerated, as soon as the tire receives a driving force, a driving grip force power immediately acts in the tread portion 108C near the center, which is already in a driving state, on the other hand, braking deformation of the tread portion 108E near the tread edge, which is already in a breaking state, once returns to neutral and then shifts to driving deformation so that a driving force cannot be readily exercised. In order to make the tread portion 108E near the tread edge in a driving state, a large traction force is required. If an accelerator is opened and a driving force is added into a tire in order to add such a traction force, the tread portion in the tire center side, which is originally in a driving state is easy to slip, which causes an idling state.

In order to solve such problems, the inventor thinks of the following two improvement methods.
The first improvement method is to increase a tread gauge on a spiral belt in order to prevent, as much as possible, a state that the tire center portion is deformed by a driving force and the tread shoulder portion is deformed by a braking force.

Since a spiral belt has the property of not being extended in the circumferential direction, the spiral belt directly shows the effect of the difference in radii R1, R2. The tread deformation generated due to difference in speed of the spiral belt is constant displacement. That is to say, if a tread gauge is increased, shear strain of rubber is decreased because displacement in the back and forth shear directions is constant so that driving deformation and braking deformation of the tread will be relaxed. Therefore, it is important that a distance from a spiral belt to a tread surface is thickened. However, when a tread gauge is excessively thick, the tread becomes weak with respect to shear in the lateral direction, which may cause deterioration of lateral grip performance. Therefore, it is effective that a spiral belt is wound on the inner side of a belt layer as much as possible and other intersecting belt layers are disposed on the spiral layer so that the intersecting belt layers provide the property of being strong in the lateral direction and extensible in the circumferential direction.

Next, the second improvement method will be described. If tread deformation of a tire shoulder portion which is originally in a braking side can be made in a driving side if only a little, it is contemplated that a traction force can greatly act on a tread edge. For this reason, it is one solution to increase belt speed in a tread edge. However, since this belt speed is decided by a belt radius as mentioned above, a tire having an excessively large belt radius cannot be used as a pneumatic tire for a motorcycle.

Therefore, as for a tread edge, it is contemplated that belt speed is increased by adopting a structure that a belt is easy to be extended in the circumferential direction after a tread contacts the ground. In other words, in turning with a large camber angle (hereinafter, referred to as a large camber timing) by adopting a structure that a belt in a center half side of a ground contact portion is not extended in the tire circumferential direction and a belt in a tread edge half side is extended in the tire circumferential direction, the belt in the tread edge side is extended after the tread contacts the ground so as to increase belt speed in the tread edge side and to reduce braking deformation in the tread edge side. As a result, traction performance (acceleration performance from a state where a vehicle body of a motorcycle is largely inclined) in a large camber timing is improved.

It is a common technique to wind a spiral belt layer on the entire region of a tread. In such a tire a belt in a tread shoulder portion cannot be extended in the equator direction. Therefore, when a spiral belt is not wound near a tread edge but arranged only in a center side, belt speed in the tread edge is increased in a large camber timing so that traction performance can be improved. In addition, belt speed in the tread shoulder portion is increased in a large camber timing so as to get closer to belt speed in the tread center side, thereby restraining unnecessary movement of a tread portion contacting the ground. In other words, the tread having received a reverse shear force will receive a forward shear force so that useless movement is eliminated and uneven wear can be restrained. In addition, a spiral belt layer is disposed in the tread center portion so as to suppress the tire from expanding due to a centrifugal force in running at a high speed (when a vehicle equipped with a pneumatic tire for a motorcycle stands upright due to a high speed). As a result, driving stability at a high speed is maintained like in a tire provided with a spiral belt layer having the entire width of its tread.

Thus, the inventor has though of combining these two techniques. That is to say, by disposing a spiral belt on the inner side of frame members as much as possible, rubber thickness on the frame members is increased so as to reduce strain even if speed difference of the belt in the circumferential direction, namely displacement difference in the circumferential direction is generated. Furthermore, a spiral belt is not wound in shoulder portions having a small radius so that frame members are extended in the circumferential direction to suppress braking deformation in the shoulder portions.

The inventor has further studied through the experiments based on the above consideration to accomplish the present invention.

The invention according to claim 1 is a pneumatic tire for a motorcycle comprising one or more carcass plies and a spiral belt layer disposed on an inner side of the carcass plies in a tire radial direction and formed by spirally winding a strip-shaped rubber-coated cord layer consisting of a single cord or a plurality of parallel cords embedded in coating rubber in such a manner that a cord angle is within a range between 0 degree and 5 degrees with respect to a tire circumferential direction, the spiral belt layer lying only in areas from a tire center to positions away from the tire center by 0.65L to 0.85L where L is a tread surface distance from the tire center to a tread edge.

The range between 0 degree and 5 degrees with respect to the tire circumferential direction is determined in view of a manufacturing error.

In the invention according to claim 1, the width of the spiral belt layer is determined using L which is a width of the tread surface of the half of the tread. In other words, a distance from the tire center to the tread edge along the surface of the tire is regarded as L. The half width of the spiral belt layer is determined to be within a range between 0.65L and 0.85L. In other words, the spiral belt layer does not lie in regions between 0.35L and 0.15L from each of the tread edges.

The half width of the spiral belt layer of 0.65L to 0.85L is based on the consideration of the ground contact portion at a camber angle of around 50 degrees when a motorcycle is most largely inclined. Only a portion having a width of 0.4L to 0.5L of the entire width 2L of the tread contacts the ground in turning at a camber angle of 50 degrees. In the invention according to claim 1, as mentioned above, the spiral belt layer is disposed in the tread center portion to prevent frame members from being extended in the circumferential direction in the ground contact range in a large camber timing while the spiral belt layer is not disposed in the tread edge sides to enable the frame members to be positively extended in the circumferential direction. The half of the ground contact portion lies in a position away from the tread edge by 0.2L to 0.25L and the edge of the spiral belt layer preferably lies around this position. The effect can be seen as long as the spiral belt is not wound in the tread shoulder side of the ground contact portion even if a portion where the spiral belt is not wound is not the precise half of the ground contact portion. That is why the range of 0.65L to 0.85L is determined.

When the half width of the spiral belt layer is less than 0.65L, the spiral belt layer is extended also in the tire center side of the ground contact surface in a large camber timing so that the belt speed of the center side is also increased, whereby the above-mentioned effect is hard to be achieved. On the other hand, when the half width of the spiral belt layer is more than 0.85L, the belt is hard to be extended in the shoulder side (tread edge side) of the ground contact surface in a large camber timing so that the belt speed of the shoulder side cannot be increased, whereby the above-mentioned effect is hard to be achieved.

The half width of the spiral belt layer is preferably within a range between 0.7L and 0.8L and more preferably within a range between 0.75L and 0.8L.

In addition, one or more carcass plies (body plies) are disposed. In case of one carcass ply, cords in the carcass ply are often arranged at 90 degrees with respect to the tire circumferential direction, that is, in the radial direction. In case of two carcass plies, both cords of the carcass plies may be arranged in the radial direction or cords of the respective carcass plies may intersect with each other at 70 degrees relative to the tire circumferential direction. In addition, as for a method of anchoring the carcass in the bead portion, the carcass may be turned around the bead core to be anchored or the carcass may be anchored in such a manner that the carcass is cut at the bead end and bead wires are arranged on the both sides of the carcass cord end to sandwich the carcass.

The spiral belt layer which is non-extensible in the tire circumferential direction is disposed on the inner side of the at least one carcass ply. With this, the spiral belt layer is disposed further away from the tread surface in the radially inner side in comparison to a case when the spiral belt layer is disposed on the radially outer side of the carcass layer. Accordingly, the distance from the non-extensible spiral belt layer in the circumferential direction to the tread surface, that is, the substantial tread thickness can be secured. If the spiral belt layer lies inside of the carcass layer, the tread thickness is substantially increased for the thickness of the carcass layer. In addition, the carcass plies are extended in the circumferential direction since the cords embedded in the carcass plies have a cord angle of not less than 30 degrees with respect to the tire circumferential direction. Therefore, the carcass plies can be deformed in the tire circumferential direction although they are frame members so as to partially take over deformation of the tread rubber. As a result, deformation of the tread rubber in the tire circumferential direction is relaxed.

When there are two or more carcass plies, the spiral belt may be disposed on the radially inner side of the two carcass plies, or the spiral belt layer may be disposed between two carcass plies. The structure that the spiral belt is disposed on the radially inner side of the two carcass plies has the advantage of considerably securing the substantial thickness of the tread rubber. On the other hand, the structure that the spiral belt layer is disposed between two carcass plies has the advantage of preventing the spiral belt layer from appearing on the tire inside (the tire inner circumference surface side) and then preventing the spiral belt layer from being taken off in the tire inside.

In the invention according to claim 2, intersecting layers embedded with organic fiber cords lie in at least a part of an area from a widthwise edge of the spiral belt layer to the tread edge, and the organic fiber cords of the respective intersecting layers intersect with each other with a cord angle of not less than 30 degrees and less than 85 degrees relative to the tire circumferential direction.

In the invention according to claim 2, the intersecting layers lie at least a part of right and left shoulder portions having a width of 0.15L to 0.35L, where the spiral belt layer is not disposed. If the intersecting layers are not disposed in the part, in-plane shear stiffness of the belt is easy to be reduced, the belt is excessively weak and a grip force in turning is easy to be reduced. Since the spiral belt is wound in the tread center portion, even if the intersecting layers are not disposed, belt stiffness is kept high, which does not become a problem.

In the invention according to claim 2, the cords of the intersecting layers are determined to have a cord angle of not less than 30 degrees and less than 85 degrees relative to the tire circumferential direction. When a cord angle relative to the tire circumferential direction (equator direction) is less than 30 degrees, which means that the cord angle gets closer to a cord angle of the spiral belt layer, the belt becomes hard to be extended in the tire circumferential direction (equator direction). Now, against the spirit of the present invention to extend the belt of the shoulder portion in the equator direction in the ground contact region, the frame members are hard to be extended in the equator direction in the tread shoulder portion so that belt speed of the tread shoulder portion is hard to be increased. Therefore, the tread shoulder portion is kept deformed by a braking force and uneven wear easily occurs in addition that traction grip is hard to be obtained. On the other hand, when a cord angle of the intersecting layers is more than 85 degrees, a sufficient intersecting effect (an effect of enhancing in-plane shear stiffness of the belt by overlapping the belts, in which cords intersect with each other between the belts) as the intersecting layers cannot be obtained, sufficient in-plane sutiffness in the intersecting layers cannot be provided and thus sufficient grip performance in turning cannot be not provided. A cord angle is preferably not less than 45 degrees since the frame members are easy to be extended in the equator direction. In addition, a cord angle is preferably not more than 75 degrees in view of in-plane shear stiffness.

The cords embedded with the intersecting layers disposed in the shoulder portions are organic fiber cords. If cords having stiffness in a compression direction of the cords like steel cords are arranged as the intersecting layers, the frame members are hard to be bent out of the plane so that the ground contact surface is decreased and a grip force is reduced. Organic fiber cords do not have large stiffness in a cord compression direction to reduce out-of-plane stiffness of the frame members and to increase the ground contact surface. In addition, organic fiber cords have so strong stiffness in a cord tensile direction as to effectively increase in-plane stiffness.

In the invention according to claim 2, the intersecting layers are disposed in the shoulder regions. Alternatively, carcass plies may serve as the intersecting layers or other intersecting layers than the carcass plies of claim 1 may be disposed. Of course, carcass plies may intersect and intersecting belt layers may be arranged in addition to these carcass plies. In case that carcass plies serve as the intersecting layers, at least two carcass plies are required and these carcass plies intersect with each other. In case that belts other than carcass plies serve as the intersecting layers, at least one body ply is required and for example, two intersecting belts may be arranged on the radially outer direction of one radial body ply to form the intersecting layers.

The material of the cords embedded with the spiral belt layer may be steel and organic fiber. Since the spiral belt layer does not intersect, it is unlikely to increase out-of-plane stiffness of the belt more than required. In case that cords intersect like belts in the shoulder portion, use of steel cords should be avoided. As material of the intersecting layers, fiber having high tensile stiffness and resistant to heat like aromatic polyamide is preferable.

In the invention according to claim 3, intersecting belt layers embedded with organic fiber cords are disposed between the spiral belt layer and the tread portion as the intersecting layer to have a width of not less than 90% of the entire width 2L of the tread portion, and the organic fiber cords of respective intersecting belt layers intersect with each other with a cord angle of not less than 30 degrees and less than 85 degrees relative to the tire circumferential direction.

Claim 3 determines that there are at least two intersecting belt layers in addition to the body ply and the organic fiber cords of the respective intersecting belt layers intersect with each other. The cord angle of the intersecting belt layers is not less than 30 degrees and less than 85 degrees. The reason is the same as that of claim 2. The intersecting belt layers are disposed between the spiral reinforcement layer and the tread layer. That is to say, the intersecting belt layers may be disposed inside or outside of the body ply which is on the spiral reinforcement layer. The both cases have the advantage of greatly securing the thickness from the spiral belt layer to the tread surface (the substantial thickness of the tread will be increased for the thickness of the intersecting belt layers). In addition, the width is not less than 90% of the tread width 2L. As the increase of the belt width, in-plane shear stiffness of the belt is increased. The upper limit may be more than the tread width. However, if the width is excessively wide, the intersecting layers will reach a side wall, which causes increase of stiffness of the side wall. Therefore, the realistic upper limit is 110%.

In case that the intersecting belt layers are disposed in addition to the carcass ply like in claim 3, one carcass ply may be acceptable. In case of one carcass ply, the radial structure is adopted.

The frame members such as the carcass ply, the belt layers and the like, which are disposed on the spiral belt layer are easy to be extended in the circumferential direction since the frame members have a cord angle of not less than 30 degrees. On the other hand, the frame members are hard to be deformed and have appropriate stiffness in the widthwise direction in comparison with simple rubber due to reinforcement by cords and the like. Therefore, it is possible to form a tread having stiffness in the lateral direction in comparison with the case when a thickness of tread rubber is simply increased.

In the invention according to claim 4, a belt reinforcing layer embedded with organic fiber cords is disposed adjacent to the inner side of the tread portion in the tire radial direction to have a width of not less than 90% of the entire width 2L of the tread portion, and the organic fiber cords of the belt reinforcing layer have a cord angle of 85 degrees to 90 degrees relative to the tire circumferential direction.

In the invention according to claim 4, an organic fiber member is disposed adjacent to the inner side of the tread portion in the tire radial direction to have a cord angle of 85 degrees to 90 degrees relative to the tire circumferential direction (the equator direction). Since the tread portion has a portion where the spiral belt layer is disposed and a portion where the spiral belt layer is not disposed, even if the frame members of the tire suddenly change their stiffness at the border of the above-mentioned portions, the frame members prevent a rider from noticing the difference in grade of the tire and feeling uncomfortable when this border contacts the ground (that is, when the ground contact portion of the tread is shifted to run on this border as the tire is more and more inclined in turning). The cords of the internal belt and the like have much larger stiffness than that of tread rubber. Therefore, a rider feels the difference in grade when there is a discontinuous part in the internal frame members. Thus, a rider is hard to notice this difference in grade by making the outermost belt continuous from the tire center to the tire shoulder like in claim 4. In order to make a rider unaware of this difference in grade most effectively, it is preferable to arrange cords along the tire widthwise direction (that is, the direction of 90 degrees with respect to the tire circumferential direction). In claim 4, the cord angle of 85 degrees to 90 degrees relative to the tire circumferential direction (equator direction) is determined in view of a manufacturing error.

In addition, the belt reinforcing layer has a width of not less than 90% of the entire width 2L of the tread portion. The object of the belt reinforcing layer is to make a rider unaware of the above-mentioned difference in grade, that is, to prevent the outermost belt from being divided by covering an end of the spiral belt layer with the belt reinforcing layer. Therefore, the belt reinforcing layer preferably has a wider width to cover the entire width of the tread portion. If the belt reinforcing layer has a width of not less than 90%, it can sufficiently cover the difference in grade of the spiral belt layer. Although the upper limit is not determined in claim 4, the belt reinforcing layer may cover the entire width of the tread portion and reach a side wall portion. In other words, the belt reinforcing layer may have a width of 110% of the entire width 2L of the tread portion. The upper limit of the width is preferably 110% of the width 2L, wherein the belt reinforcing layer does not slightly reach the maximum width of the side wall portion, and more preferably 105%.

In this specification, the entire width of the tread portion means a width of the tread portion measured in a periphery direction. The width of the tread portion measured in a periphery direction means a width measured along the circumference of the tread portion in the substantial arc direction and a width of a region contacting the ground in every camber angle (CA) in running.

### EFFECT OF THE INVENTION

According to the present invention, it is possible to realize a pneumatic tire for a motorcycle further improving driving stability especially in turning.

### BRIEF DESCRIPTION OF THE DRAWINGS

Fig. 1 is a sectional view in a tire radial direction of a pneumatic tire for a motorcycle according to a first embodiment.
Fig. 2 is a sectional view in a tire radial direction of a pneumatic tire for a motorcycle according to a second embodiment.
Fig. 3 is a sectional view in a tire radial direction of a pneumatic tire for a motorcycle according to a third embodiment.
Fig. 4 is a view illustrating a force measured in a test example.
Fig. 5 is a view illustrating a contact state of a pneumatic tire for a motorcycle.
Fig. 6 is a sectional view in a tire radial direction of a conventional pneumatic tire for a motorcycle.

### DESCRIPTION OF REFERENCE NUMERALS

- 10: pneumatic tire for a motorcycle
- 15A, 15B: carcass ply
- 18: tread portion
- 20: spiral belt layer
- 20E: widthwise edge
- 21: rubber-coated cord layer
- 22: belt reinforcing layer
- 24: intersecting belt layers
- 30: pneumatic tire for a motorcycle
- 40: pneumatic tire for a motorcycle
- 80: spiral belt layer
- 84: intersecting belt layers
- 88: tread portion
- 83A, 83B: carcass ply
- CL: tire center

### BEST MODE FOR CARRYING OUT THE INVENTION

Hereinafter, embodiments of the present invention will be described. In the second and third embodiments elements identical to those having been explained are denoted by the same numerals and their explanations are omitted. In the following description a width of a belt and the like means a width measured in a periphery direction.

### [First embodiment]

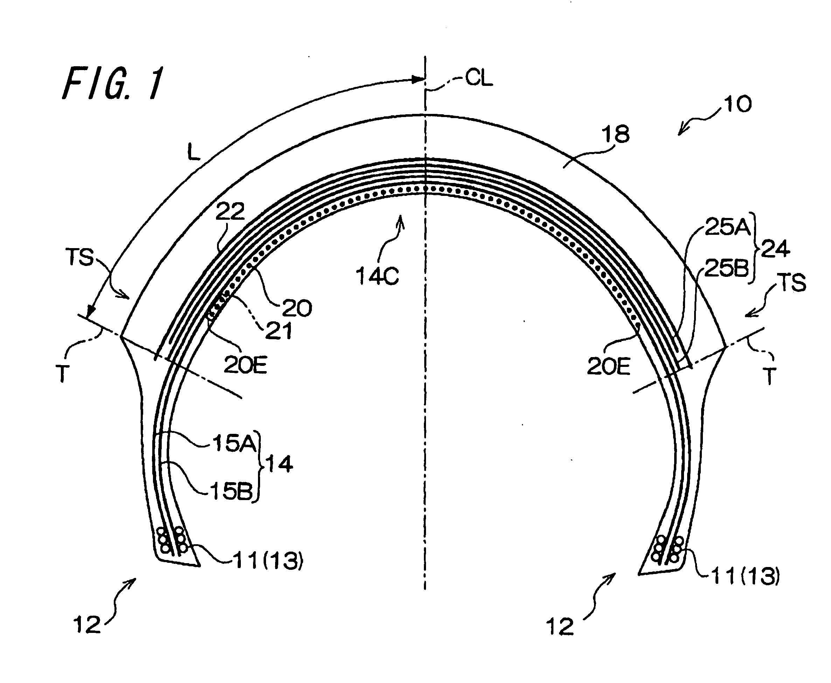

At first, the first embodiment will be described. As shown in Fig. 1, a pneumatic tire 10 for a motorcycle according to this embodiment comprises a pair of right and left bead portions 12 and a carcass layer 14 toroidally extending from the bead portions 12.

The carcass layer 14 toroidally extends between bead cores 11 of the bead portions 12. The carcass layer 14 may comprise one or a plurality of carcass plies (body plies). In case that the carcass layer 14 comprises two carcass plies 15A, 15B, cords constituting the carcass plies 15A, 15B may extend in the radial direction (the direction in which an angle with respect to the tire circumferential direction is 90 degrees) or the carcass plies 15A, 15B may have a bias structure in which cords of the respective carcass plies 15A, 15B intersect with each other with a cord angle of 30 degrees to 85 degrees relative to the tire circumferential direction. Also in this case, cords in each carcass ply 15A, 15B often have such a configuration that cords are formed by twisting aliphatic polyamide fiber and arranged at certain intervals.

The end portions of the carcass plies 15A, 15B are anchored by the bead cores 11 and sandwiched by bead wires 13 from the both sides of the carcass plies 15A, 15B. The end portions of the carcass plies 15A, 15B may be turned around the bead cores 11.

In addition, the pneumatic tire 10 for a motorcycle comprises a spiral belt layer 20 on the radially inner side of a crown portion 14C of the carcass layer 14. This spiral belt layer 20 is formed by spirally winding a strip-shaped rubber-coated cord layer 21 consisting of a single cord or a plurality of parallel cords embedded in coating rubber in such a manner that a cord angle is within a range between 0 degree and 5 degrees with respect to the tire circumferential direction. This spiral belt layer 20 lies only in areas from a tire center CL to positions away from the tire center CL by 0.65L to 0.85L where L is a tread surface distance (in other words, 1/2 of a width of a tread portion 18 measured in the periphery direction) from the tire center CL to a tread edge T.

Furthermore, the pneumatic tire 10 for a motorcycle comprises intersecting belt layers 24 on the radially outer side of the crown portion 14C of the carcass layer 14. These intersecting belt layers 24 are embedded with organic fiber cords intersecting with each other with a cord angle of not less than 30 degrees and less than 85 degrees relative to the tire circumferential direction. In addition, the intersecting belt layers 24 are disposed to have a width of not less than 90% of the entire width 2L of the tread portion in order to cover at least a part of ranges from widthwise edges 20E of the spiral belt layer 20 to the tread edges T.

A belt reinforcing layer 22 and the tread portion 18 are provided sequentially on the radially outer side of the intersecting belt layers 24. The belt reinforcing layer 22 is embedded with organic fiber cords with a cord angle of 85 degrees to 90 degrees relative to the tire circumferential direction and disposed adjacent to the radially inner side of the tread portion 18 to have a width of not less than 90% of the entire width 2L of the tread portion 18.

In this way, in this embodiment the width of the spiral belt layer 20 is determined so that the spiral belt layer 20 lies only in areas from the tire center CL to positions away from the tire center CL by 0.65L to 0.85L.

A portion of the tread portion 18 near the tread edge T contacts the ground in turning with a large camber angle. Thus, frame members can be positively extended in the circumferential direction in a portion of the tread portion 18, where the spiral belt layer 20 is not disposed while frame members are prevented from being extended in the circumferential direction in a ground contact area in a portion of the tread portion 18, where the spiral belt layer 20 is disposed.

With this, it is possible to provide a pneumatic tire 10 for a motorcycle capable of maintaining high driving stability in running at a high speed and improving driving stability (traction performance) in turning when a vehicle body is largely inclined. It is also possible to suppress wear of shoulder portions.

In addition, in the pneumatic tire 10 for a motorcycle the spiral belt layer 20 is disposed on the radially inner side of the carcass layer 14. With this, the spiral belt layer 20 is disposed further away from the tread surface in the radially inner side in comparison to a case when the spiral belt layer 20 is disposed on the radially outer side of the carcass layer 14. Accordingly, the distance from the spiral belt layer 20 which is not extended in the tire circumferential direction to the tread surface, that is, the substantial tread thickness can be secured. Since the spiral belt layer 20 lies inside of the carcass layer 14, the tread thickness is substantially increased for the thickness of the carcass layer 14. In addition, the carcass plies 15A, 15B are extended in the tire circumferential direction since the cords embedded in the carcass plies 15A, 15B have a cord angle of not less than 30 degrees with respect to the tire circumferential direction. Therefore, the carcass plies 15A, 15B can be deformed in the tire circumferential direction although they are frame members so as to partially take over deformation of the tread portion 18. As a result, deformation of the tread portion 18 in the tire circumferential direction is relaxed. In addition, since the spiral belt layer 20 is disposed on the radially inner side of two carcass plies 15A, 15B, the substantial thickness of the tread rubber can be greatly secured.

The intersecting belt layers 24 are disposed in addition to the carcass plies 15A, 15B. With this, since the substantial thickness of the tread portion 18 is increased for the thickness of the intersecting belt layers, the thickness from the spiral belt layer 20 to the tread surface can be more greatly secured.

The belt reinforcing layer 22 is disposed adjacent to the inside of the tread portion 18. With this, even if frame members of the tire suddenly change their stiffness at a border between a portion where the spiral belt layer is disposed and a portion where the spiral belt layer is not disposed, they prevent a rider from noticing the difference in grade of the tire and feeling uncomfortable when the border contacts the ground in turning.

### [Second embodiment]

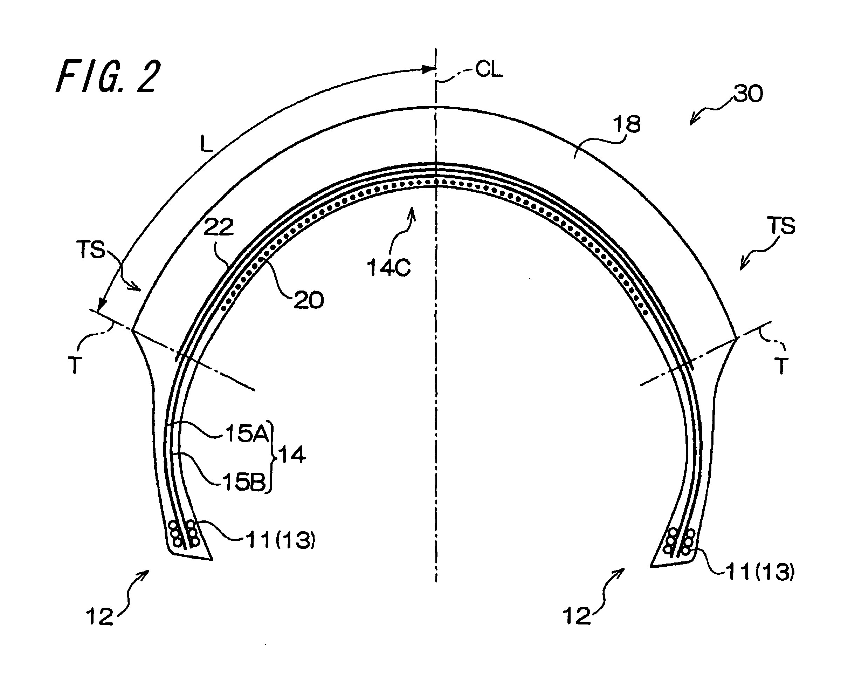

Next, the second embodiment will be described. As shown in Fig. 2, a pneumatic tire 30 for a motorcycle according to this embodiment is so configured not to have intersecting belt layers 24 in comparison with the first embodiment. Therefore, the configuration of this embodiment is more simplified than that of the first embodiment.

### [Third embodiment]

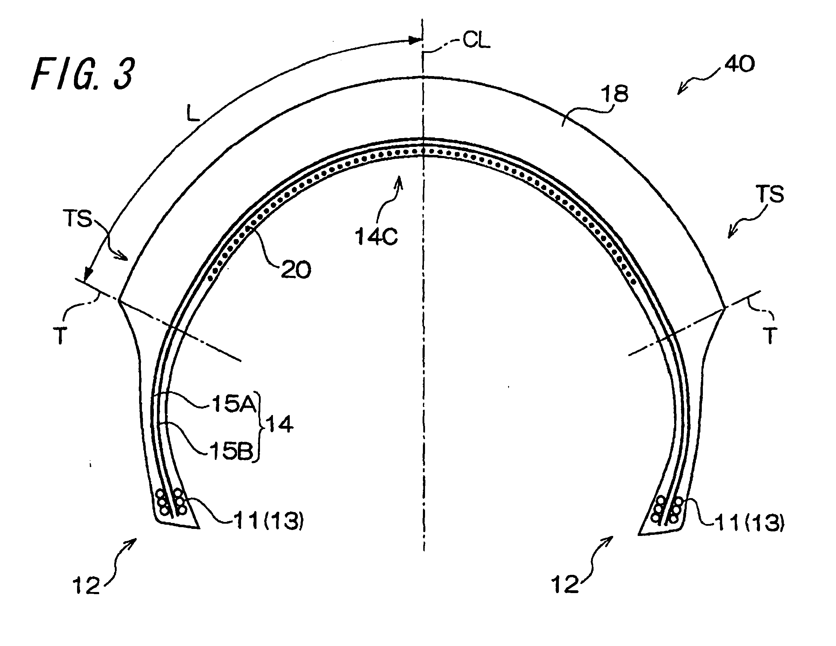

Next, the third embodiment will be described. As shown in Fig. 3, a pneumatic tire 40 for a motorcycle according to this embodiment is so configured not to have a belt reinforcing layer 22 in comparison with the second embodiment. Therefore, the configuration of this embodiment is more simplified than that of the second embodiment.

### EXAMPLE

In order to confirm advantages of the present invention, five pneumatic tires for a motorcycle according to the first embodiment (hereinafter referred to as Example tire 1 and Example tires 4 to 7), one pneumatic tire for a motorcycle according to the second embodiment (hereinafter referred to as Example tire 2), one pneumatic tire for a motorcycle according to the third embodiment (hereinafter referred to as Example tire 3), five comparative pneumatic tires for a motorcycle (hereinafter referred to as Comparative Example tires 1 to 5) and two conventional pneumatic tires for a motorcycle (hereinafter referred to as Conventional Example tires 1 and 2) are prepared and evaluated for their performance.

Each of the tires have a size of 190/50ZR17. Each tire has two carcass plies in a carcass layer. In addition, each tire is not provided with a groove in a tread portion.

### (Example tire 1)

Example tire 1 is an example of a pneumatic tire 10 for a motorcycle according to the first embodiment and has the structure shown in Fig. 1. The spiral belt layer 20 has a width of 180 mm, which is 0.75 times of the entire width 2L (240 mm) of the tread portion (a width of one side of the tread portion from the tire center (tire equatorial plane) CL is 90 mm). The spiral belt layer 20 is not wound in the tread shoulder portions TS in this example. The tread portion 18 has a thickness of 6 mm.

The cord material of the carcass plies 15A, 15B is aliphatic polyamide (nylon). In this example, aliphatic polyamide fibers are twisted to form a cord of 0.5 mm φ. In the tread shoulder portions TS, aliphatic polyamide cords are arranged at a cord density of 50 units/50 mm.
In addition, a cord angle of the aliphatic polyamide cords is 90 degrees with respect to the tire equator direction.

The cords of the spiral belt layer 20 are formed by spirally winding steel cords formed by twisting a steel single wire of 0.18 mm φ with 1x3 type at a cord density of 50 units/50 mm. At that time, a strip having two parallel cords embedded in coating rubber is spirally wound along the substantial tire equator direction (the substantial tire circumferential direction) in the tire rotation axis direction.

The intersecting belt layers 24 consist of two intersecting belt members 25A, 25B. These intersecting belt members are formed in such a manner that aromatic polyamide (Kevlar : registered trademark) is twisted to be a cord of 0.6 mm φ and thus-twisted cord is arranged at a cord density of 30 units /50 mm. The cords of the respective intersecting belt members intersect with each other with a cord angle of 60 degrees relative to the tire equator direction. The intersecting belt member 25B disposed on the radially inner side has a width of 240 mm and the intersecting belt member 25A disposed on the radially outer side has a width of 230 mm.

Furthermore, the belt reinforcing layer 22 disposed on the radially outer side of these intersecting belt layers 24 is embedded with cords having a cord angle with respect to the tire equator direction of 90 degrees. The belt reinforcing layer 22 is formed in such a manner that aromatic polyamide (Kevlar : registered trademark) is twisted to be a cord of 0.8 mm φ and thus-twisted cord is arranged at a cord density of 50 units /50 mm. The belt reinforcing layer 22 has a width of 240 mm.

The tire tread portion 18 disposed adjacent to the radially outer side of the belt reinforcing layer 22 has a thickness of 6mm.

### (Example tire 2)

Example tire 2 is an example of a pneumatic tire for a motorcycle according to the second embodiment and has the structure shown in Fig. 2.

Example tire 2 is not provided with the intersecting belt layers 24 as compared with Example tire 1. In addition, a cord angle (an angle with respect to the tire circumferential direction) of cords embedded in the carcass plies of the carcass layer is set to be 45 degrees.

### (Example tire 3)

Example tire 3 is an example of a pneumatic tire for a motorcycle according to the third embodiment and has the structure shown in Fig. 3.

Example tire 3 is not provided with the belt reinforcing layer 22 as compared with Example tire 2.

### (Example tire 4)

Example tire 4 is an example of a pneumatic tire for a motorcycle according to the first embodiment. Example tire 4 is provided with carcass plies of a carcass layer having a cord angle of 40 degrees as compared with Example tire 1.

### (Example tire 5)

Example tire 5 is an example of a pneumatic tire for a motorcycle according to the first embodiment. Example tire 5 is provided with intersecting belt layers having a cord angle of 75 degrees as compared with Example tire 1.

### (Comparative Example tire 1)

Comparative Example tire 1 is provided with intersecting belt layers having a cord angle of 20 degrees as compared with Example tire 1.

### (Comparative Example tire 2)

Comparative Example tire 2 is provided with intersecting belt layers having a cord angle of 90 degrees as compared with Example tire 1.

### (Example tire 6)

Example tire 6 is an example of a pneumatic tire for a motorcycle according to the first embodiment. Example tire 6 is provided with a spiral belt layer 20 having a width of 160 mm, which is 0.677 times of the entire width 2L (240 mm) of the tread portion as compared with Example tire 1 (a width of one side of the tread portion from the tire center (tire equatorial plane) CL is 80 mm).

### (Example tire 7)

Example tire 7 is an example of a pneumatic tire for a motorcycle according to the first embodiment. Example tire 7 is provided with a spiral belt layer 20 having a width of 200 mm, which is 0.833 times of the entire width 2L (240 mm) of the tread portion as compared with Example tire 1 (a width of one side of the tread portion from the tire center (tire equatorial plane) CL is 100 mm).

### (Comparative Example tire 3)

Comparative Example tire 3 is provided with a spiral belt layer 20 having a width of 140 mm, which is 0.583 times of the entire width 2L (240 mm) of the tread portion as compared with Example tire 1 (a width of one side of the tread portion from the tire center (tire equatorial plane) CL is 70 mm).

### (Comparative Example tire 4)

Comparative Example tire 4 is provided with a spiral belt layer 20 having a width of 210 mm, which is 0.875 times of the entire width 2L (240 mm) of the tread portion as compared with Example tire 1 (a width of one side of the tread portion from the tire center (tire equatorial plane) CL is 105 mm).

### (Conventional Example tire 1)

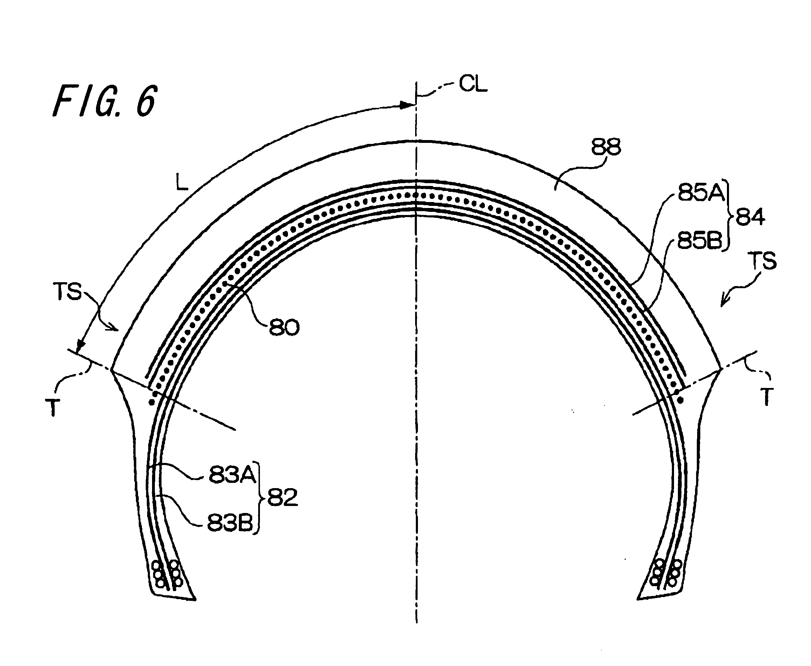

Conventional Example tire 1 which has the structure shown in Fig. 6 comprises a carcass layer 82, a spiral belt layer 80, intersecting belt layers 84 and a tread portion 88 sequentially in the radially outer direction.

The carcass layer 82 has the same configuration as that of the carcass layer 14 and two carcass plies 83A, 83B constituting the carcass layer 82 have the same cord angle, cord density and the like as those of Example tire 1.

The intersecting belt layers 84 consist of two intersecting belt members 85A, 85B. The intersecting belt members 85A, 85B respectively have the same width as that of the intersecting belt members 15A, 15B. Therefore, a step difference of 5 mm is formed at a belt edge of the intersecting belt members 85A, 85B.

### (Conventional Example tire 2)

In Conventional Example tire 2 the positions of the intersecting belt layers and the spiral belt layer are exchanged as compared with Conventional Example tire 1. Therefore, a carcass layer, intersecting belt layers, a spiral belt layer are disposed sequentially from the radially inner side of the tire.

### (Test method and Evaluation result)

In this test example, in order to evaluate how traction performance is improved when a target vehicle body is inclined, the regulation test is conducted with a drum as follows.

In this test example, each tire is mounted on a standard rim and then applied with the internal pressure of 240 kPa. In this specification, a standard rim means a standard rim having an applicable size regulated by YEARBOOK 2006 published by JATMA.

As a test machine, sandpaper is attached on a drum having a diameter of 3 m and the sandpaper is used to resemble a road surface. The drum is rotated at a speed of 150 km/h and the tire is pushed from the upper side of the drum to the sandpaper with the load of 150 kgf at a camber angle of 50 degrees. In this test example, the tire is provided with a chain for transmitting a force to the rotation axis and can be applied with a driving force. In this test example, a driving force is added by using a motor.

In this test example, a tire is rotated at a speed of 100 km/h and then linearly accelerated by a driving force to 120 km/h for 3 seconds. Since the drum is rotated at a speed of 100 km/h, the tire receives a driving force and traction can be measured in the state that the vehicle body is inclined. A force applied to the tire can be measured with a force sensor installed at the wheel center of the tire.

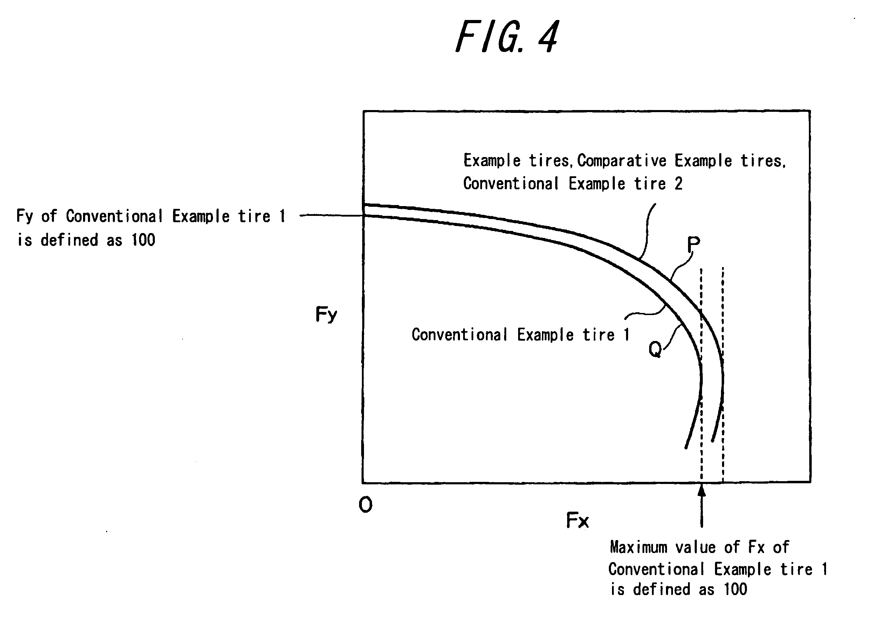

When thus-measured force is plotted with Fx (a force acting in the direction parallel to the tire travelling direction) as the horizontal axis and Fy (a force acting in the direction vertical to the tire travelling direction) as the vertical axis, waveforms P, Q as shown in Fig. 4 are provided. These waveforms P, Q are referred to as a friction oval. An intercept of Fy in Fx=0 shows a pure lateral force with a driving force being 0, which is referred to as a camber thrust. In this test example, a camber thrust which is an intercept of Fy and peak tip of traction are used for evaluation. In this test example, when the tire is rotated faster by a driving force, grip performance of the tire in a traction state is evaluated. The waveform of the graph moves in the positive direction of Fx with time. It may be said that the maximum of Fx is an index of a traction grip.

In this test example, performance (traction performance) of other tires is indexed for relative evaluation with the maximum value of Fx of Conventional Example tire 1 being defined as 100. The evaluation results are shown in Table 1.

**[Table 1]**

| | Tire kind | | | | | | |
|---|---|---|---|---|---|---|---|
| Test kind | Conventional Example 1 | Conventional Example 2 | Example 1 | Example 2 | Example 3 | Example 4 | Example 5 |
| Fy index in drum test | 100 | 99 | 106 | 105 | 104 | 106 | 105 |
| Fx index in drum test | 100 | 95 | 112 | 109 | 107 | 111 | 111 |
| Turning performance at a low speed in a corner | 5 | 4 | 9 | 8 | 7 | 9 | 8 |
| Acceleration performance at a low speed from a corner | 5 | 4 | 10 | 9 | 7 | 8 | 9 |
| Continuity in turning | 10 | 10 | 10 | 8 | 4 | 10 | 10 |
| Wear amount after run | 8 | 10 | 3 | 4 | 5 | 3 | 3 |

| | Tire kind | | | | | | |
|---|---|---|---|---|---|---|---|
| Test kind | Example 6 | Example 7 | Comparative Example 1 | Comparative Example 2 | Comparative Example 3 | Comparative Example 4 | Comparative Example 5 |
| Fy index in drum test | 105 | 105 | 103 | 99 | 103 | 103 | 104 |
| Fx index in drum test | 110 | 110 | 102 | 103 | 101 | 103 | 105 |
| Turning performance at a low speed in a corner | 8 | 8 | 7 | 5 | 7 | 7 | 8 |
| Acceleration performance at a low speed from a corner | 8 | 8 | 6 | 7 | 7 | 8 | 8 |
| Continuity in turning | 10 | 10 | 10 | 10 | 9 | 10 | 8 |
| Wear amount after run | 4 | 5 | 5 | 5 | 5 | 6 | 5 |

Next, competitive test for driving stability is conducted with the use of a real motorcycle. The real motorcycle test is conducted in such a manner that a conventional tire is always used for a front tire and each test tire is used for a rear tire since each test tire used in this test example is a rear tire. A test method and an evaluation method are described as follows.

Each test tire is mounted on a sports type motorcycle of 1000cc, actually runs on a test course and then driving stability (cornering performance) is evaluated based on a test rider's feeling by the ten points method. The intense run for imitating a motorcycle race is conducted in a course and the maximum speed reaches 200 km/h.

There are following three evaluation items. The evaluation results are also shown in Table 1.
1) Traction performance at a low speed in a corner (acceleration performance from a state that a vehicle body is largely inclined at a speed of 50 km/h)
2) Turning performance at a low speed in a corner (lateral force grip performance in a state that a vehicle body is largely inclined at a speed of 50 km/h)
3) Continuity when a motorcycle in turning is forced to be inclined (performance to confirm there is no abnormal behavior when a motorcycle is inclined)
In addition, the uneven wear state of the tire shoulder portion after 10 laps of the test course is checked. In other words, the wear amount of the tire shoulder portion is measured and the wear amount of other tire is indexed for relative evaluation with the wear amount of Conventional Example tire 2 being defined as 10. This index is also shown in Table 1. The smaller index means the little wear amount, that is, the better result.

The inventor considers as follows from the above-mentioned evaluation results.
(1) Example tires 1, 2 are superior to Conventional Example tires 1, 2 in all items.
(2) By comparison with Example tires 2 and 3, the effect of the belt reinforcing layer 34 (see Fig. 2) which is disposed on the outermost side of the belt layer and has a cord angle of 90 degrees can be understood. That is to say, in case that the belt reinforcing layer 22 is disposed, both of Fy, Fx are slightly higher and continuity when a motorcycle in turning is forced to be inclined is better.
(3) By comparison with Example tires 1, 3, 5 and Comparative Example tires 3, 4, the effect of the width of the spiral belt layer can be understood. According to the evaluation results of these tires, it is possible to determine an effective range of the width of the spiral belt layer.
(4) By comparison with Example tire 1 and Comparative Example tire 5, the effect of disposing the spiral belt layer on the radially inner side of the carcass layer can be understood. Although the effect can be shown in Comparative Example tire 5, higher effect can be provided in Example tire 1 by disposing the spiral belt layer on the radially inner side of the carcass layer.
(5) The wear amount of Example tires 1 to 7 is approximately half of that of Conventional Example tires 1, 2. It is found that the wear amount of the tread shoulder portion can be suppressed. The wear amount is small because frame members are easy to be extended in the tread edge as mentioned above, the belt speed in the tread edge is increased, difference between the speed in the tire center side and the speed in the tread edge is reduced and the tire center side of the tread portion is prevented from slipping earlier when traction is applied.

## Claims

1. A pneumatic tire (10) for a motorcycle comprising
one or more carcass plies (15A, 15B) and
a spiral belt layer (20) disposed on an inner side of the carcass plies (15A, 15B) in a tire radial direction and formed by spirally winding a strip-shaped rubber-coated cord layer (21) consisting of a single cord or a plurality of parallel cords embedded in coating rubber in such a manner that a cord angle is within a range between 0 degree and 5 degrees with respect to a tire circumferential direction, **characterized by** the spiral belt layer (20) lying only in areas from a tire center (CL) to positions away from the tire center (CL) by 0.65L to 0.80L where L is a tread surface distance from the tire center (CL) to a tread edge (T).

2. The pneumatic tire (10) for a motorcycle according to claim 1, wherein intersecting layers (24) embedded with organic fiber cords lie in at least a part of an area from a widthwise edge of the spiral belt layer (20) to the tread edge (T), and the organic fiber cords of the respective intersecting layers (24) intersect with each other with a cord angle of not less than 30 degrees and less than 85 degrees relative to the tire circumferential direction.

3. The pneumatic tire (10) for a motorcycle according to claim 2, wherein intersecting belt layers (24) embedded with organic fiber cords are disposed between the spiral belt layer (20) and a tread portion (18) as the intersecting layer (24) to have a width of not less than 90% of an entire width 2L of the tread portion (18), and the organic fiber cords of respective intersecting belt layers(24) intersect with each other with a cord angle of not less than 30 degrees and less than 85 degrees relative to the tire circumferential direction.

4. The pneumatic tire (10) for a motorcycle according to any one of claims 1 to 3, wherein a belt reinforcing layer (22) embedded with organic fiber cords is disposed adjacent to an inner side of a tread portion (18) in the tire radial direction to have a width of not less than 90% of an entire width 2L of the tread portion (18), and the organic fiber cords of the belt reinforcing layer (22) have a cord angle of 85 degrees to 90 degrees relative to the tire circumferential direction.

## Patentansprüche

1. Luftreifen (10) für ein Motorrad, umfassend
eine oder mehrere Karkassenlagen (15A, 15B), und
eine spiralförmige Gürtellage (20), die an einer Innenseite der Karkassenlagen (15A, 15B) in einer radialen Reifenrichtung angeordnet und durch spiralförmiges Wickeln einer streifenförmigen, mit Gummi beschichteten Cordlage (21) gebildet ist, die aus einem einzelnen Cord oder einer Mehrzahl von parallelen Cords, in eine Gummierung eingebettet, besteht, so dass ein Fadenwinkel in einem Bereich zwischen 0 Grad und 5 Grad in Bezug eine Reifenumfangsrichtung liegt, **dadurch gekennzeichnet, dass** die spiralförmige Gürtellage (20) nur in Bereichen von einem Reifenzentrum (CL) zu Positionen, die 0,65L bis 0,80L vom Reifenzentrum (CL) entfernt liegen, vorgesehen ist, wobei L eine Laufflächendistanz vom Reifenzentrum (CL) zur Profilkante (T) ist.

2. Luftreifen (10) für ein Motorrad nach Anspruch 1, wobei überkreuzende Lagen (24), die in organische Fasercords eingebettet sind, in zumindest einem Teil eines Bereichs von einer breitenweisen Kante der spiralförmigen Gürtellage (20) zur Profilkante (T) liegen, und wobei die organischen Fasercords der jeweiligen überkreuzenden Lagen (24) einander in einem Fadenwinkel von nicht weniger als 30 Grad und weniger als 85 Grad in Bezug auf die Reifenumfangsrichtung überkreuzen.

3. Luftreifen (10) für ein Motorrad nach Anspruch 2, wobei überkreuzende Gürtellagen (24), die in organische Fasercords eingebettet sind, zwischen der spiralförmigen Gürtellage (20) und einem Profilabschnitt (18) als die überkreuzende Lage (24) angeordnet ist, um eine Breite von nicht weniger als 90% einer gesamten Breite 2L des Profilabschnitts (18) aufzuweisen, und die organischen Fasercords der jeweiligen überkreuzenden Gürtellagen (24) einander in einem Fadenwinkel von nicht weniger als 30 Grad und weniger als 85 Grad in Bezug auf die Reifenumfangsrichtung überkreuzen.

4. Luftreifen (10) für ein Motorrad nach einem der Ansprüche 1 bis 3, wobei eine Gürtelverstärkungsschicht (22), die in organische Fasercords eingebettet ist, benachbart einer Innenseite eines Profilabschnitts (18) in der radialen Reifenrichtung angeordnet ist, um eine Breite von nicht weniger als 90% einer gesamten Breite 2L des Profilabschnitts (18) aufzuweisen, und die organischen Fasercords der jeweiligen Gürtelverstärkungslagen (22) einen Fadenwinkel von 85 Grad bis 90 Grad in Bezug auf die Reifenumfangsrichtung aufweisen.

## Revendications

1. Bandage pneumatique (10) pour un motocycle, comprenant :
une ou plusieurs nappes de carcasse (15A, 15B) ; et
une couche de ceinture en spirale (20), agencée sur un côté interne des nappes de carcasse (15A, 15B), dans une direction radiale du bandage pneumatique, et formée par enroulement en spirale d'une couche de câblés revêtus de caoutchouc en forme de bande (21), comprenant un seul câblé ou plusieurs câblés parallèles noyés dans une gomme de revêtement, de sorte qu'un angle de câblé est compris dans un intervalle allant de 0 degré à 5 degrés par rapport à une direction circonférentielle du bandage pneumatique, **caractérisé en ce que** la couche de ceinture en spirale (20) est agencée uniquement dans des zones s'étendant d'un centre du bandage pneumatique (CL) vers des positions situées à l'écart du centre du bandage pneumatique (CL), à une distance de 0,65L à 0,80L, L représentant une distance de la surface de la bande de roulement du centre du bandage pneumatique (CL) vers un bord de la bande de roulement (T).

2. Bandage pneumatique (10) pour un motocycle selon la revendication 1, dans lequel des couches à intersection (24), dans lesquelles sont noyés des câblés de fibres organiques, sont agencées dans au moins une partie d'une zone s'étendant d'un bord dans le sens de la largeur de la couche de ceinture en spirale (20) vers le bord de la bande de roulement (T), les câblés de fibres organiques des couches à intersection respectives (24) se coupant les uns les autres à un angle de câblé non inférieur à 30 degrés et inférieur à 85 degrés par rapport à la direction circonférentielle du bandage pneumatique.

3. Bandage pneumatique (10) pour un motocycle selon la revendication 2, dans lequel les couches de ceinture à intersection (24), dans lesquelles sont noyés des câblés de fibres organiques, sont agencées entre la couche de ceinture en spirale (20) et une partie de la bande de roulement (18), constituant la couche à intersection (24), de sorte à avoir une largeur ne représentant pas moins de 90% d'une largeur complète 2L de la partie de bande de roulement (18), les câblés de fibres organiques des couches de ceinture à intersection respectives (24) se coupant les uns les autres à un angle de câblé non inférieur à 30 degrés et inférieur à 85 degrés par rapport à la direction circonférentielle.

4. Bandage pneumatique (10) pour un motocycle selon l'une quelconque des revendications 1 à 3, dans lequel une couche de renforcement de la ceinture (22), dans laquelle sont noyés des câblés de fibres organiques, est agencée près d'un côté interne de la partie de bande de roulement (18), dans la direction radiale du bandage pneumatique, de sorte à avoir une largeur ne représentant pas moins de 90% d'une largeur complète 2L de la partie de bande de roulement (18), les câblés de fibres organiques de la couche de renforcement de la ceinture (22) formant un angle de câblé compris entre 85 degrés et 90 degrés par rapport à la direction circonférentielle du bandage pneumatique.
